# EUROPEAN PATENT APPLICATION

(11) **EP 1 653 386 A2**
(43) Date of publication of application: **03.05.2006**
(21) Application number: 05109257.5
(22) Date of filing: 05.10.2005
(51) Int. Cl.: G06F 21/00

(54) **Information processing apparatus and operation control method**

(30) Priority: 29.10.2004 JP 2004316824
(71) Applicant: KABUSHIKI KAISHA TOSHIBA, Tokyo (JP)
(72) Inventor: Hirota, Toshiyuki, 105-8001, Tokyo (JP); Hibi, Kenji, 105-8001, Tokyo (JP)
(74) Representative: Henkel, Feiler & Hänzel

(57) **Abstract**

An information processing apparatus includes a position detecting unit (213) for detecting a position, a time detecting unit (202) for detecting a time, and controlling unit (200) for performing first operation related to security based on detected first position and detected first time, and for performing second operation related to security based on detected second position and detected second time.

## Description

The present invention relates to an information processing apparatus such as a personal computer and operation control method for use in the apparatus.

Generally, in a personal computer, various security functions are utilized. Examples of a typical security function include a password authentication function, a function of managing access rights of a file/folder, a function of limiting a network of an access destination by zoning the network into a local network, Intranet, and Internet, and a firewall function.

If all the functions are valid, the security level of the personal computer can be improved, conversely, the operability of the personal computer is greatly lowered.

For example, if a user adds a password to an important file, he/she must input the password every time he/she opens the file. In addition, if the firewall is made valid, access to another computer and sharing of files within a workgroup are limited.

However, the above-described respective security functions are required or not required depending on the place where the user uses the personal computer. In the meantime, in recent years, a portable type personal computer such as a notebook type personal computer has been wide spread. Such a portable type personal computer is used in various places, for example, an office, a home, and an outdoor. A necessary security function is different for each of these places where the user uses the personal computer.

In addition, even in the same place, the necessary security function is different, for example, in the daytime and at night.

In Jpn. Pat. Appln. KOKAI Publication No. 2003-99400 (hereinafter, document 1), an information processing apparatus for changing a security level depending on a place where the information processing apparatus is used by applying a system for detecting a current position using the global positioning system (GPS) is disclosed.

However, according to the information processing apparatus disclosed by the above document 1, no consideration has been given to a time period of using the information processing apparatus and the security level is fixed only by the current position of the information processing apparatus.

Under the circumstances, it has been required to provide an information processing apparatus and an operation control method which can dynamically changing the security level even in the same place where the user uses the information processing apparatus.

An object of the present invention is to provide an information processing information processing apparatus which can dynamically changing the security level even in the same place where the user uses the information processing apparatus.

According to an embodiment of the present invention, there is provided an information processing apparatus comprising a position detecting means for detecting a position, a time detecting means for detecting a time, and controlling means for performing first operation related to security based on detected first position and detected first time, and for performing second operation related to security based on detected second position and detected second time.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing an appearance of an information processing apparatus according to an embodiment of the present invention;
FIG. 2 is a block diagram showing a system configuration of the information processing apparatus of the embodiment;
FIG. 3 is a view showing an example of an allocation table for use in the information processing apparatus of the embodiment;
FIG. 4 is a view showing an example of set items of each profile for use in the information processing apparatus of the embodiment;
FIG. 5 is a view showing an example of set items of each profile for use in the information processing apparatus of the embodiment;
FIG. 6 is a block diagram showing a functional configuration for realizing an operational environment setting function to be performed by the information processing apparatus of the embodiment;
FIG. 7 is a diagram showing transition of a state of the information processing apparatus of the embodiment;
FIG. 8 shows a manner that a profile to be applied to the information processing apparatus of the embodiment is changed; and
FIG. 9 is a flowchart for explaining a procedure of the operating environment setting processing to be performed by the information processing apparatus of the embodiment.

With reference to the drawings, one embodiment of the present invention will be described below.

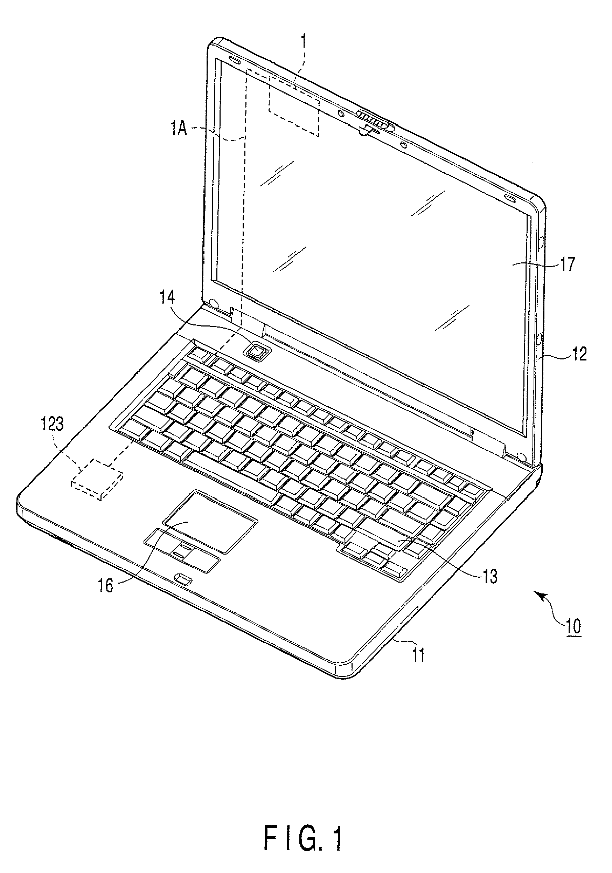

FIG. 1 shows the appearance of an information processing apparatus according to an embodiment of the present invention. The information processing apparatus 10 is realized as a portable type personal computer that can be activated by a battery.

FIG. 1 is a front view with a display unit of the portable type information processing apparatus 10 opened. The computer 10 is a notebook type personal computer and is configured by a computer main body 11 and a display unit 12. In the display unit 12, a display device made of a liquid crystal display (LCD) is incorporated, and a display screen of the LCD is located substantially at a center of the display unit 12.

The display unit 12 is rotatably attached between a release position and a closed position with respect to the computer main body 11. The computer main body 11 has a thin box-type casing, and on the upper surface thereof, a keyboard 13, a power button 14 for powering on/off the computer, a touch pad 16 and the like are arranged. In addition, inside of the computer main body 11, a global positioning system (GPS) unit 123 is provided.

The GPS unit 123 is a position detecting unit for detecting a current position of the computer 10. The GPS unit 123 has a function of calculating a coordinate (latitude, longitude) showing the current position of the computer main body 10 by receiving an exogenous electric wave from some positioning satellites. The GPS unit 123 is connected to a GPS antenna 1 via an antenna cable 1A. The GPS antenna is used for receiving the electric wave from each positioning satellite.

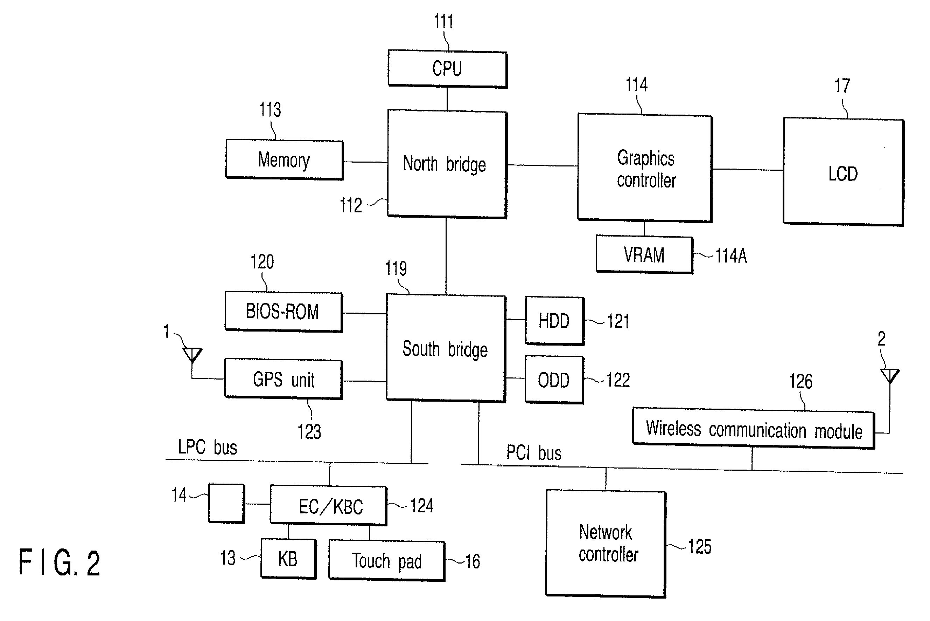

Next, with reference to FIG. 2, the system configuration of the computer 10 will be described below.

As shown in FIG. 2, the computer 10 is provided with a CPU 111, a north bridge 112, a main memory 113, a graphics controller 114, an LCD 17, a south bridge 119, a BIOS-ROM 120, a hard disk drive (HDD) 121, an optical disk drive (ODD) 122, the GPS unit 123, an embedded controller/keyboard controller IC (EC/KBC) 124, a network controller 125, a wireless communication module 126, and the like.

The CPU 111 is a processor for controlling the operation of the computer 10. The CPU 111 executes an operating system (OS) and various application programs that are loaded from the hard disk drive (HDD) 121 to the main memory 113. In addition, the CPU 111 also executes a system basic input output system (BIOS) stored in the BIOS-ROM 123. The system BIOS is a program for controlling the hardware.

The system BIOS has an operational control function (hereinafter, referred to as an operational environment setting function) of automatically changing an operation related to security of the computer 10 in accordance with a current time and a place where the computer 10 is currently used. The operational environment setting function is realized by using operation information (hereinafter, referred to as operation management information). The operation management information is information to designate an operational environment related to the security of the computer 10 for each time period and for each predetermined using place. The operation management information is created in advance by a user. The operational environment setting function is realized by the system BIOS alone or by cooperation of the system BIOS and the operating system (OS).

The north bridge 112 is a bridge device for connecting a local bus of the CPU 111 to the south bridge 119. In addition, the north bridge 112 also has a function of making communication with the graphics controller 114 via an accelerated graphics port (AGP) bus or the like.

The graphics controller 114 is a display controller for controlling the LCD 17 to be used as a display monitor of the computer 10. The graphics controller 114 generates a display signal to be transmitted from video data written in a video memory (VRAM) 114A to the LCD 17. The sough bridge 119 also has a real time clock to manage the current time and day (year, month, day, hour, minute, second).

The embedded controller/keyboard controller IC (EC/KBC) 124 is a one-chip microcomputer having an embedded controller for managing a power and a keyboard controller for controlling the keyboard (KB) 13, the power button 14, and the touch pad 16 are integrated.

The network controller 125 is a communication apparatus for establishing wireless communication with an external network, for example, Internet. The wireless communication module 126 is a communication apparatus for establishing wireless communication with the outside by using the antenna 2. For example, the wireless communication module 126 executes the wireless communication that is defined by IEEE 802.11 Standard and executes the communication with an external apparatus, for example, a cellular phone.

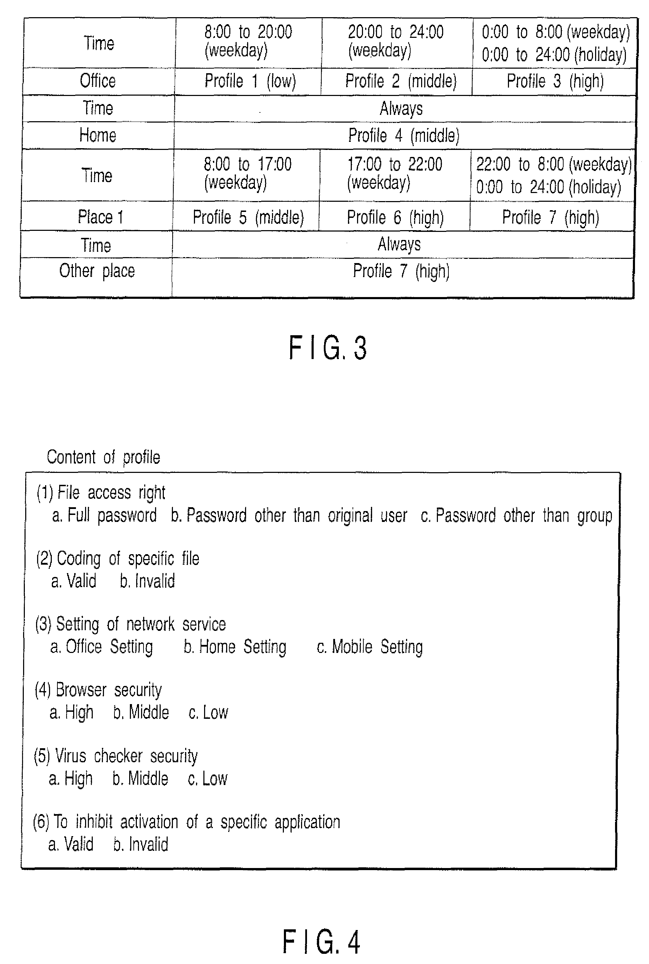

Next, with reference to FIG. 3, an example of the operation management information will be described below.

As described above, the operation management information defines the operational environment with respect to the security of the computer 10 for each time period and for each using place. Here, the case where four using places including "Office", "Home", "Place 1", and "Other place" have been registered in advance as the place where the user uses the computer 10 is assumed.

The operation management information is configured by a plurality of profiles and an allocation table which correlates each of these plural profiles to a specific place where the user uses the apparatus and a specific time period among a plurality of using places ("Office", "Home", "Place 1", and "Other place"). Each profile is operation designation information (hereinafter, referred to as operating environment setting information) to designate the operation (the operating environment) related to the security of the computer 10.

As shown in FIG. 3, the allocation table is a database to manage a plurality of profiles using a place where the user uses the computer 10 and a time period as an index. In this allocation table, a relation between the profile and the time period is indicated with respect to each of four using places of "Office", "Home", "Place 1", and "Other place".

The user of the computer 10 can freely set or change the content of each profile and the content of the allocation table.

In FIG. 3, a relation between the place where the user uses the computer 10, a time period when the user uses the computer 10, and the profile to be used are defined as follows:

### Using place 1: Office

Time period 1 (from 8 o'clock to 20 o'clock on weekday): Profile 1 (security level = low level)
Time period 2 (from 20 o'clock to 24 o'clock on weekday): Profile 2 (security level = middle level)
Time period 3 (from 24 o'clock to 8 o'clock next morning on weekday, and all day on holiday): Profile 3 (security level = high level)

### Using place 2: Home

Time period 1 (all day on weekday and holiday): Profile 4 (security level = middle level)

### Using place 3: Place 1

Time period 1 (from 8 o'clock to 17 o'clock on weekday): Profile 5 (security level = middle level)
Time period 2 (from 17 o'clock to 22 o'clock on weekday): Profile 6 (security level = high level)
Time period 3 (from 22 o'clock to 8 o'clock next morning on weekday, and all day on holiday): Profile 7 (security level = high level)

### Using place 4: Other place

Time period 1 (all day on weekday and holiday): Profile 7 (security level = high level)

For example, when the current position of the computer 10 belongs to an area corresponding to "Office", the system BIOS selects the profile corresponding to the current time from among three profiles corresponding to "Office", namely, the profile 1, the profile 2, and the profile 3. Then, the system BIOS automatically sets the operating environment of the computer 10 in accordance with the content of the selected profile. Thereby, when the current position of the computer 10 belongs to an area corresponding to "Office", the operating environment of the computer 10 is automatically changed in accordance with progress of the current time.

In addition, for example, when the current position of the computer 10 belongs to an area corresponding to "Place 1", the system BIOS selects the profile corresponding to the current time from among three profiles corresponding to "Place 1", namely, the profile 5, the profile 6, and the profile 7. Then, the system BIOS automatically sets the operating environment of the computer 10 in accordance with the content of the selected profile. Thereby, when the current position of the computer 10 belongs to an area corresponding to "Place 1", the operational environment of the computer 10 is automatically changed in accordance with progress of the current time.

Whether today is weekday or holiday is decided, for example, in accordance with a calendar managed by a real time clock.

Next, with reference to FIG. 4, the content of the operating environment that can be designated by each profile will be described below.

Each profile includes a set value related to each of a plurality of the operating environment setting items about the security. As shown in FIG. 4, each profile includes the operating environment setting items corresponding to each of six functions, namely,
(1) file access right, (2) coding of a specific file,
(3) setting of a network service, (4) browser security,
(5) virus checker security, and (6) to inhibit activation of a specific application.
   (1) The file access right is a function of limiting the access to the important file. There are three kinds of the operating environment setting value related to the file access right as follows:
      a: Setting of full password (set passwords to all files)
      b: Password other than the original user (request a password from a user other than the original user of the computer 10)
      c: Password other than a group (request a password from the user of a group other than the group to which the computer 10 belongs)
   (2) Coding of a specific file is a function of coding a specific file. There are two kinds of the operational environment setting values related to the coding of a specific file as follows:
      a: valid (encrypt)
      b: invalid (not encrypt)
   (3) Setting of a network service is a function of setting the network service to be used. There are three kinds of the operating environment setting values related to this setting of the network service as follows:
      a: Office Setting (setting with regard to a network service used at an office)
      b: Home Setting (setting with regard to a network service used at home)
      c: Mobile Setting (setting with regard to a network service used at a mobile environment)
   (4) The browser security is a function of designating the security level of the browser for mainly browsing the contents on Internet. There are three kinds of the operating environment setting values related to this browser security as follows:
      a: high (browser security level = high)
      b: middle (browser security level = middle)
      c: low (browser security level = low)
   (5) The virus checker security is a function of designating the security level of the virus check program to be executed on the computer 10. There are three kinds of the operating environment setting values related to this virus checker security as follows:
      a: high (virus checker security level = high)
      b: middle (virus checker security level = middle)
      c: low (virus checker security level = low)
   (6) To inhibit activation of a specific application is a function of inhibiting the activation of the designated specific application program. There are two kinds of the operating environment setting values related to this inhibition of the activation of a specific application as follows:
      a: valid (use the function to inhibit the activation of the specific application)
      b: invalid (not use the function to inhibit the activation of the specific application)

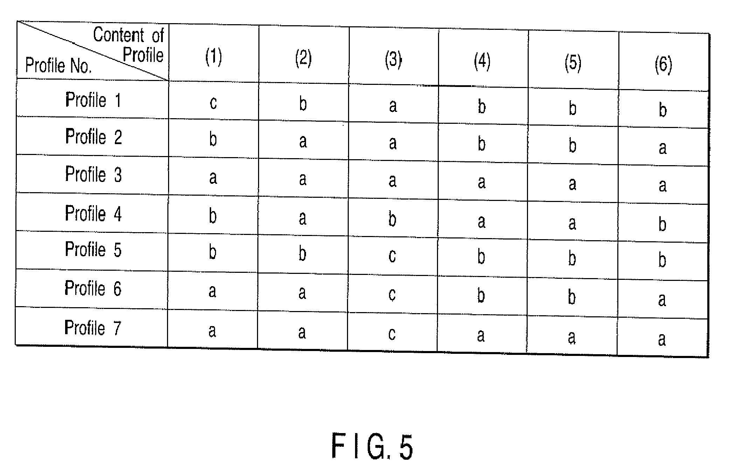

In FIG. 5, the examples of the contents of the operating environment setting values corresponding to each of the above-described profiles 1 to 7 are shown.

For example, in the profile 1, (1) the setting value related to the access right is c (Password other than a group); (2) the setting value related to the coding of a specific file is b (invalid); (3) the setting value related to the setting of the network service is "a" (setting at Office); (4) the setting value related to the browser security is b (browser security level = middle); (5) the setting value related to the virus checker security is b (virus checker security level = middle); and (6) the setting value related to the inhibition of the activation of a specific application is b (invalid).

The profile 1 is applied to the computer 10 when the place where the computer 10 is used is Office and the current time belongs to a time period from 8 o'clock to 20 o'clock on weekday. Thereby, the security level of the computer 10 is set at a low level.

In addition, in the profile 2, (1) the setting value related to the access right is b (Password other than the original user); (2) the setting value related to the coding of a specific file is "a" (valid); (3) the setting value related to the setting of the network service is "a" (Office setting); (4) the setting value related to the browser security is b (browser security level = middle); (5) the setting value related to the virus checker security is b (virus checker security level = middle); and (6) the setting value related to the inhibition of the activation of a specific application is "a" (valid).

The profile 2 is applied to the computer 10 when the place where the computer 10 is used is Office and the current time belongs to a time period from 20 o'clock to 24 o'clock on weekday. Thereby, the security level of the computer 10 is set at a middle level after the user left the office.

In the profile 3, (1) the setting value related to the access right is "a" (Setting of full password); (2) the setting value related to the coding of a specific file is "a" (valid); (3) the setting value related to the setting of the network service is "a" (Office setting); (4) the setting value related to the browser security is "a" (browser security level = high); (5) the setting value related to the virus checker security is "a" (virus checker security level = high); and (6) the setting value related to the inhibition of the activation of a specific application is "a" (valid).

The profile 3 is applied to the computer 10 when the place where the computer 10 is used is Office and the current time belongs to a time period from 0 o'clock to 8 o'clock on weekday and a time period during holidays. Thereby, the security level of the computer 10 is set at a high level when the computer 10 is used at the office night and holidays.

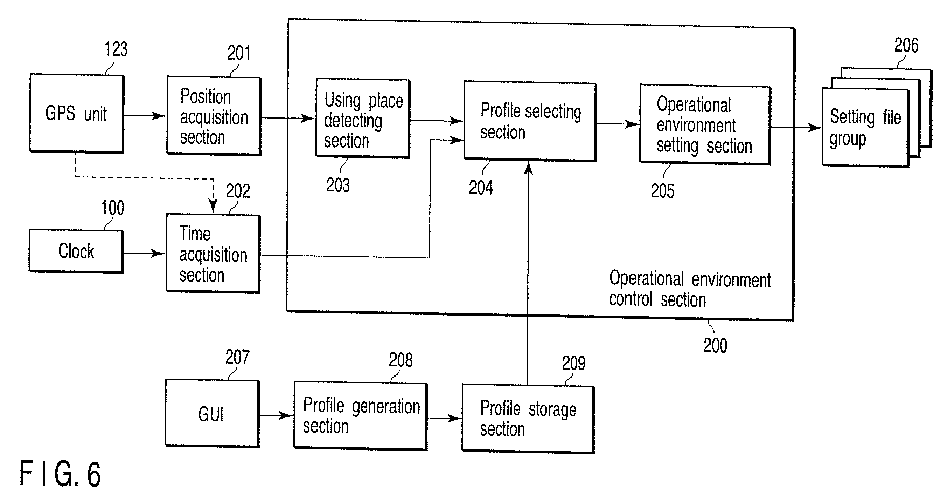

Next, with reference to FIG. 6, the functional configuration for realizing the above-described operating environment setting function will be described below.

The operating environment setting function is configured by an operating environment control section 200, a position acquisition section 201, a time acquisition section 202, a graphical user interface (GUI) 207, a profile generation section 208, a profile storage section 209, and the like. Among these sections, the operating environment control section 200, the position acquisition section 201, the time acquisition section 202, the graphical user interface (GUI) 207, and the profile generation section 208 are realized as a software module. These software modules are included in, for example, the system BIOS.

The position acquisition section 201 controls the GPS unit 123 to acquire the positional information indicating the current position of the computer 10 from the GPS unit 123. The time acquisition section 202 acquires the current time (hour, minute) from a clock 100 such as a real time clock mounted on the computer 10, and determines whether or not today is a holiday or a weekday in accordance with the calendar information managed by the clock 100.

The graphical user interface (GUI) 207 displays a set-up screen for creating or changing the allocation table shown in FIG. 3 and the profiles shown in FIG. 4 on the LCD 17. The user can input or change the setting values on the set-up screen, can input or change the time period, and can perform the registration operation of the place where the user uses the computer 10.

The profile generation section 208 generates a profile, an allocation table and the like in accordance with the data inputted from the GUI 207. Each profile and the allocation table generated by the profile generation section 208 are stored in the profile storage section 209 as the operation management information. The profile storage section 209 is realized by, for example, a specific storage area in the BIOS-ROM 120 configured by a non-volatile memory that is electrically rewritable or a specific storage area in the HDD 121.

The operational environment control section 200 executes the processing of dynamically changing various operating environments (the file access right, coding of the specific file, setting of the network service, the security of the browser, the security of the virus checker, and inhibition of the activation of the specific application) about the security of the computer 10 in accordance with the current position of the computer 10 and the current time.

The operating environment control section 200 is configured by a using place detecting section 203, a profile selecting section 204, an operating environment setting section 205, and the like.

The using place detecting section 203 detects the using place to which the current position of the computer 10 belongs from among a plurality of using places (Office, Home, Place 1 or the like) registered in the computer 10 in advance. In the computer 10, for each of the registered using place, for example, the area belonging to the range of a radius about 10 km centering on the specific position in the using place is saved as the positional information of this using place.

The profile selecting section 204 selects the profile corresponding to the using place detected by the using place detecting section 203 and the current time acquired by the time acquisition section 202 from among the profile groups stored in the profile storage section 209, and refers to the allocation table stored in the profile storage section 209.

The operating environment setting section 205 sets the operating environment of the computer 10 based on the profile selected by the profile selecting section 204. In the HDD 121 of the computer 10, a setting file group 206 for setting an operating environment corresponding to the operating environment setting items (the file access right, the coding of the specific file, setting of the network service, the browser security, the virus checker security, and the inhibition of the activation of the specific application) respectively is stored. The operating environment setting section 205 sets the operating environment of the computer 10 by rewriting the setting values inside each setting file 206 based on the selected profile.

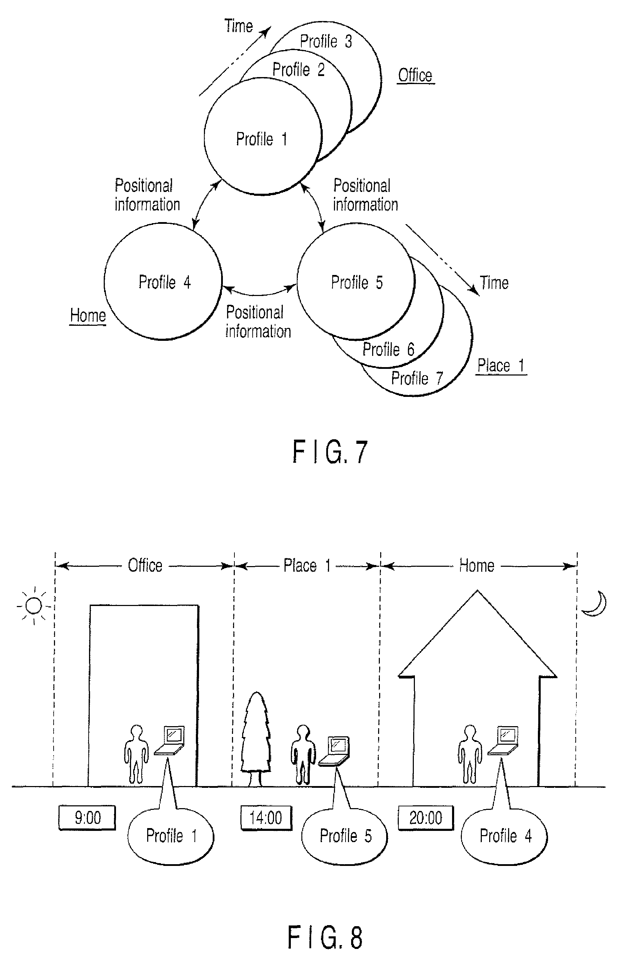

FIG. 7 shows transition of the condition of the computer 10.

When the computer 10 is located at the office, the profile applied to the computer 10 is automatically switched to the profile 1, the profile 2, and the profile 3 in this order in accordance with the progress of the time. In addition, when the computer 10 is located at the place 1, the profile applied to the computer 10 is automatically switched to the profile 5, the profile 6, and the profile 7 in this order in accordance with the progress of the time. Moreover, when the computer 10 is located at home, the profile 4 is always applied to the computer 10. If the computer 10 moves from the office to the place 1, for example, in a time period from 8 o'clock to 20 o'clock, the profile applied to the computer 10 is automatically changed from the profile 1 to the profile 5.

FIG. 8 shows how the profile applied to the computer 10 is changed when the computer 10 moves in the order of "Office", "Place 1", and "Home".

When the using place detecting section 203 detects that the using place corresponding to the current position of the computer 10 is the office, the profile selecting section 204 selects any one profile from among the profile 1, the profile 2, and the profile 3 in accordance with the current time. For example, as shown in FIG. 8, if the user owing the computer 10 arrives at the office at 9 o'clock with the computer 10 powered on, the profile selecting section 204 selects the profile 1. Thereby, the profile applied to the computer 10 is changed from the profile 7 corresponding to "other place" to the selected profile 1. The operating environment of the computer 10 is automatically set in accordance with the content of the selected profile 1 (security level = low level). When the user powers on the computer 10 inside the office at 9 o'clock, the profile 1 is selected.

In addition, in the case where the using place detecting section 203 detects that the using place corresponding to the current position of the computer 10 is the place 1, the profile selecting section 204 selects any profile from among the profile 5, the profile 6, and the profile 7 in accordance with the current time. For example, if the user powers on the computer 10 at the place 1, the profile selecting section 204 selects the profile 5. The operating environment of the computer 10 is automatically set in accordance with the content of the selected profile 1 (security level = middle level).

In addition, in the case where the using place detecting section 203 detects that the using place corresponding to the current position of the computer 10 is the home, the profile selecting section 204 always selects the profile 4 in any time period. If the user powers on the computer 10 at home, the profile selecting section 204 selects the profile 4. The operating environment of the computer 10 is automatically set in accordance with the content of the selected profile 4 (security level = middle level).

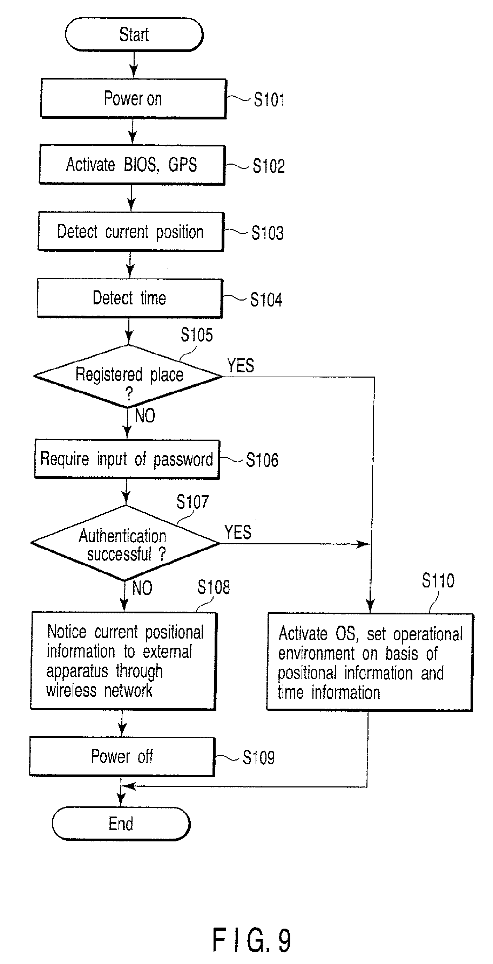

Next, with reference to the flow chart shown in FIG. 9, the procedure of the operating environment setting processing to be executed by the computer 10 will be described below.

The CPU 111 executes the following operating environment setting processing under the control of the system BIOS.

If the power button 14 of the computer 10 is pressed, the EC/KBC 124 powers on the computer 10 (step S101). If the computer 10 is powered on, the CPU 111 activates the system BIOS and the GPS unit 123 (step S102).

The CPU 111 detects the current position of the computer 10 by using the GPS unit 123 (step S103), and detects the current time by using the real time clock (step S104). In step S103, the CPU 111 also executes processing of detecting the using place to which the current position of the computer 10 belongs from among a plurality of using places that have been registered in the computer 10 in advance (Office, Home, Place 1, and the like).

The CPU 111 determines whether or not the current position of the computer 10 belongs to any of the registered using places (step S105). In the meantime, "other place" is not the registered using place.

In the case where the current position of the computer 10 belongs to any one of the registered using places (YES in step S105), the CPU 111 sets the operational environment of the computer 10 by using the profile corresponding to the using place and the current time to which the current position of the computer 10 belongs after activating the operating system (OS) of the computer 10 (step S110). In step S110, the CPU 111 selects the profile corresponding to the current using place and the current time from among the profile group stored in the profile storage section 209 with reference to the allocation table stored in the profile storage section 209. Then, the CPU 111 sets the operating environment of the computer 10 (the file access right, the coding of the specific file, setting of the network service, the browser security, the virus checker security, and the inhibition of the activation of the specific application) in accordance with the selected profile. In the meantime, in step S110, the operational environment may be set through the operating system (OS).

On the other hand, in the case where the current position of the computer 10 does not belong to any registered using place (NO in step S105), the CPU 111 displays the password input screen on the LCD 17 and requires the user of input of the password (step S106). If the authentication of the password becomes successful, namely, if the password input by the user with typing coincides with the password registered in the computer 10 in advance (YES in step S107), the CPU 111 determines that the current user is the authorized user and executes the processing of step S110. In this case, the profile to be applied to the computer 10 is a profile corresponding to "Other place".

In the case where the authentication of the password fails (No in step S107), the CPU 111 determines that the current user is not the authorized user and the computer 10 is illegally taken out by a person with bad intent. Then, the CPU 111 transmits an alarm message to the exterior apparatus such as a cellular phone of the owner of the computer 10 by a wireless signal (step S108). The transmission of the alarm message is performed by using the wireless communication module 126. The alarm message includes the position information indicating the current position of the computer 10. Thereby, it is possible to notice the location of the computer 10 to a center managing stolen goods and the owner of the computer 10.

After that, the CPU 111 executes the processing of inhibiting the operation of the computer 10 (step S109). Specifically, in step S109, the CPU 111 executes the processing of automatically powering off the computer 10 in collaboration with the EC/KBC 124. In the meantime, in place of powering of the computer 10, the processing such as key locking or the like may be performed. Thereby, the operation of the computer 10 is limited. It is also possible to prevent the computer 10 from being illegally taken out by a person with bad intent.

In the meantime, during powering on of the computer 10, the processing from steps S103 to S110 shown in FIG. 9 is periodically performed.

As described above, according to the present embodiment, in accordance with the using place of the computer 10 and the current time, the operation with respect to the security of the computer 10 is automatically changed. Accordingly, it is possible to automatically change the security level in accordance with the using place and it is possible to automatically change the security level in accordance with the time period in the same using place. Thereby, the operation to change the security level by the user can be decreased. In addition, since each profile includes a plurality of setting values corresponding to a plurality of operational environment setting items, respectively, the operability suitable for each combination of the using place and the time period can be realized.

In addition, according to the present embodiment, the current position of the computer 10 is detected by using the GPS unit 123. However, for example, by using the position detecting service utilizing a cellular phone network, the current position of the computer 10 may be detected.

Further, since the above-described operating environment setting function is realized by the computer program, the same effect as the present embodiment can be easily realized only by introducing this computer program in the normal computer through a computer-readable storage medium.

## Claims

1. An information processing apparatus comprising:
a position detecting means (213) for detecting a position;
a time detecting means (202) for detecting a time; and
controlling means (200) for performing a first operation related to security based on detected first position and detected first time, and for performing a second operation related to security based on detected second position and detected second time.

2. The information processing apparatus according to claim 1, further comprising transmitting means for transmitting an alarm message to an exterior apparatus when the controlling means does not perform operation related to the security.

3. The information processing apparatus according to claim 2, wherein the alarm message includes positional information indicating the detected position.

4. The information processing apparatus according to claim 1, 2 or 3, further comprising inhibiting means (111) for inhibiting the operation of the information processing apparatus when the controlling means does not perform operation related to the security.

5. The information processing apparatus according to claim 4, wherein the inhibiting means (111) is adapted to execute processing of powering off the information processing apparatus.

6. The information processing apparatus according to any one of claims 1 to 5, further comprising authenticating means for authenticating whether an user valid or not, and transmitting means for transmitting an alarm message to an exterior apparatus when the authenticating means determines that the user is not valid.

7. An operation control method of controlling an information processing apparatus, the method comprising:
a position detecting step (S103) for detecting a position;
a time detecting step (S104) for detecting a time; and
a controlling step (S110) for performing a first operation related to security based on detected first position and detected first time, and for performing a second operation related to security based on detected second position and detected second time.

8. The operation control method according to claim 7, further comprising a transmitting step for transmitting an alarm message to an exterior apparatus when the controlling step (S110) does not perform operation related to the security.

9. The operation control method according to claim 8, wherein the alarm message includes positional information indicating the detected position.

10. The operation control method according to any one of claims 7 to 9, further comprising an inhibiting step for inhibiting the operation of the information processing apparatus when the controlling step (S110) does not perform operation related to the security.

11. The operation control method according to claim 10, wherein the inhibiting step comprises executing processing of powering off the information processing apparatus.

12. The operation control method according to any one of claims 7 to 11, further comprising an authenticating step (S107) for authenticating whether an user valid or not, and a transmitting step for transmitting an alarm message to an exterior apparatus when the authenticating step (S107) has the result that the user is not valid.
